(19) Europäisches Patentamt
European Patent Office
Office européen des brevets

(11) **EP 4 776 021 A1**

(12) **EUROPÄISCHE PATENTANMELDUNG**

(43) Veröffentlichungstag:
**15.07.2026 Patentblatt 2026/29**

(21) Anmeldenummer: **25150775.2**

(22) Anmeldetag: **08.01.2025**

(51) Internationale Patentklassifikation (IPC):
*G01S 7/48* (2006.01)   *G01N 15/075* (2024.01)
*G01S 17/88* (2006.01)   *G01S 7/497* (2006.01)

(52) Gemeinsame Patentklassifikation (CPC):
**G01S 17/88; G01N 15/06; G01N 15/075; G01S 7/4802; G01S 7/497**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Endress+Hauser SICK GmbH+Co. KG
01458 Ottendorf-Okrilla (DE)**

(72) Erfinder:
• **Schladitz, Alexander
01127 Dresden (DE)**
• **Urban, Titus
02625 Bautzen (DE)**

(74) Vertreter: **Manitz Finsterwald
Patent- und Rechtsanwaltspartnerschaft mbB
Martin-Greif-Straße 1
80336 München (DE)**

Bemerkungen:
Geänderte Patentansprüche gemäss Regel 137(2) EPÜ.

(54) **OPTOELEKTRONISCHER SENSOR, VERWENDUNG UND VERFAHREN ZUR LIDAR-MESSUNG VON PARTIKELKONZENTRATION UND SYSTEM, VERWENDUNG UND VERFAHREN ZUR KALIBRATION**

(57)    Die Erfindung betrifft einen optoelektronischen Sensor zur Messung, insbesondere LiDAR-Messung, von Partikelkonzentration, umfassend einen Lichtsender, welcher ausgebildet ist, Sendelicht in einen Überwachungsbereich, insbesondere in der Form zumindest eines Messtrahls auszusenden, und einen Lichtempfänger, welcher ausgebildet ist, das von dem Überwachungsbereich, und insbesondere von Partikeln zumindest einer Substanz in dem Überwachungsbereich, remittierte und/oder reflektierte Sendelicht als Empfangslicht zu empfangen und basierend auf dem empfangenen Empfangslicht mittels Lichtlaufzeitverfahren Messdaten über den Überwachungsbereich, insbesondere Abstandswerte und Intensitätswerte über die Partikel der Substanz in dem Überwachungsbereich, zu gewinnen. Der optoelektronische Sensor umfasst ferner eine Verarbeitungsvorrichtung, welche ausgebildet ist, basierend auf den Messdaten und einer Umrechnungsfunktion eine Gesamtpartikelkonzentration in dem Überwachungsbereich zu ermitteln.

EP 4 776 021 A1

**Beschreibung**

Die Erfindung betrifft einen optoelektronischen Sensor, eine Verwendung und ein Verfahren zur Messung, insbesondere LiDAR-Messung, von Partikelkonzentration. Die Erfindung betrifft ferner ein System, eine Verwendung und ein Verfahren zur Kalibration eines optoelektronischen Sensors zur Messung, insbesondere LiDAR-Messung, von Partikelkonzentration.

Die quantitative Messung diffuser und somit nicht auf kleinem Raum begrenzter Partikelmengen, z.B. Staubmengen, in einer verschmutzten Umgebung und/oder Atmosphäre, z.B. in Umgebungsluft, kann für verschiedene Anwendungsgebiete, insbesondere industrielle Anwendungsgebiete, förderlich sein. Beispiele für solche Anwendungsgebiete sind eine Bestimmung von Brandherden in Industrieanlagen, wie z.B. Lagerhallen, Schächten, Straßen- und Eisenbahntunneln, eine Verringerung von Staubentwicklung bei der Umlagerung von Schüttgütern (beispielsweise bei Be- und Entladeterminals, Silos, etc.) zur Verringerung der Staubbelastung der Umgebung und zur Einhaltung von Explosionsgrenzwerten, eine Entstaubung bei der Prozessierung (z.B. auf Wertstoffhöfen, in Rohstoffrückgewinnungsanlagen, in Mahlanlagen und in Mühlen) und dem Transport (z.B. auf Förderbändern) von Schüttgütern, eine quantitative Ermittlung von diffusen und bisher nicht oder nur schwer erfassbaren Emissionen aus Produktionshallen (z.B. ausgehend von Schornsteinen, Dachöffnungen, Luken und Toren), eine Ermittlung des optimalen Einbringens von Partikeln in einen Prozess (z.B. während eines Lackierprozesses oder dem Versprühen von Zusatzstoffen in Gewächshäusern), eine frühzeitige Erkennung von Verschleiß bei zu starken Abweichungen von festgelegten Partikelkonzentrationsgrenzwerten und -verteilungen, und eine Staubhomogenitätsmessung in Rohrströmungen zur optimalen Kalkwäsche für Rauchgasentschwefelung.

Bisher fehlt es jedoch an einer Technologie, und insbesondere an einer effizienten, z.B. kostengünstigen und zeitsparenden, Technologie mit Bereitstellung kompakter Sensoren, zur Realisierung einer quantitativen Messung von Partikelkonzentration in einem, insbesondere zwei- oder dreidimensionalen, Überwachungsbereich.

Der Erfindung liegt die Aufgabe zugrunde, eine Technologie zur Realisierung einer quantitativen Messung von Partikelkonzentration bereitzustellen.

Zur Lösung der Aufgabe ist ein optoelektronischer Sensor mit den Merkmalen des Anspruchs 1 vorgesehen.

Der erfindungsgemäße optoelektronische Sensor zur Messung, insbesondere LiDAR-Messung, von Partikelkonzentration, umfasst einen Lichtsender, welcher ausgebildet ist, Sendelicht in einen Überwachungsbereich, insbesondere in der Form zumindest eines Messtrahls (z.B. entlang einer Messstrecke bzw. Messachse), auszusenden, und einen Lichtempfänger, welcher ausgebildet ist, das von dem Überwachungsbereich, und insbesondere von Partikeln zumindest einer Substanz in dem Überwachungsbereich, remittierte und/oder reflektierte Sendelicht als Empfangslicht zu empfangen und basierend auf dem empfangenen Empfangslicht mittels Lichtlaufzeitverfahren Messdaten über den Überwachungsbereich, insbesondere Abstandswerte und Intensitätswerte über die Partikel der Substanz in dem Überwachungsbereich, zu gewinnen. Der optoelektronische Sensor umfasst ferner eine Verarbeitungsvorrichtung, welche ausgebildet ist, basierend auf den Messdaten und einer Umrechnungsfunktion eine Gesamtpartikelkonzentration in dem Überwachungsbereich zu ermitteln.

Der Erfindung liegt mit anderen Worten der Gedanke zugrunde, mittels eines optoelektronischen Sensors Messdaten über den Überwachungsbereich zu gewinnen und basierend auf den Messdaten und der Umrechnungsfunktion eine Gesamtpartikelkonzentration zu ermitteln. Optoelektronische Sensoren, wie z.B. LiDAR-Sensoren, zur Entfernungsmessung von Objekten (insbesondere zur Objekterkennung und/oder Höhenkontrolle) werden in Industrieanlagen meist zur Erkennung von größeren Gefahrenquellen, wie beispielsweise sich autonom bewegenden Robotern, eingesetzt. Die Erfindung fußt auf der Erkenntnis, dass die Streuung und/oder Reflexion des von einem Lichtsender des optoelektronischen Sensors (insbesondere in der Form eines Signals und/oder Pulses) ausgesendete Sendelichts an den Partikeln bzw. Molekülen der Substanz entlang der gesamten Messstrecke durch den Überwachungsbereich erfolgen kann. Das remittierte und/oder reflektierte Sendelicht kann dann von dem Lichtempfänger als Empfangslicht (insbesondere in der Form von mehreren zeitlich nacheinander folgenden Signalen und/oder Pulsen) empfangen werden, welcher basierend darauf mittels Lichtlaufzeitverfahren Messdaten über den Überwachungsbereich, insbesondere Abstandswerte und Intensitätswerte über die Partikel der Substanz in dem Überwachungsbereich, erzeugt. Basierend auf den Messdaten und einer Umrechnungsfunktion wird dann eine Gesamtpartikelkonzentration ermittelt. Auf diese Weise kann eine quantitative Messung von Partikelkonzentration in dem (insbesondere zwei- oder dreidimensionalen) Überwachungsbereich realisiert werden.

Bekannte Technologien und Sensoren können oft keine quantitative Bestimmung der Partikelkonzentration in dem zu messenden Bereich und keine zwei- oder dreidimensionale Information davon liefern. Bekannte Sensoren können oft nur eine Punktmessung in dem Überwachungsbereich erlauben, welche jedoch keine gesicherte Aussage über die Verhältnisse in dem gesamten Überwachungsbereich oder größeren Gebieten davon liefern kann. Zudem ist oft nicht erkennbar, wo der Ort der höchsten Exposition ist, um dort die Punktmessung durchzuführen.

Die hierin beschriebenen Vorgehensweisen können dagegen eine räumlich aufgelöste Messung zur Ermittlung der Gesamtpartikelkonzentration in dem Überwachungsbereich mithilfe eines optoelektronischen Sensors (z.B. eines 2D- oder 3D-LiDAR-Sensors) bereitstellen, welcher gewöhnlich zur Abstandsmessung von Objekten eingesetzt wird. In anderen Worten können mit den hierin beschrieben Vorgehensweisen diffuse und somit nicht auf kleinem Raum begrenzte Partikelkonzentrationen (z.B. Staubmengen) quantitativ gemessen werden. Zusätzlich kann der optoelektronische Sensor auch besonders kompakt ausgestaltet sein. Insgesamt kann mit den hierin beschrieben Vorgehensweisen eine effizientere, insbesondere kostengünstigere und zeitsparendere, Messung von Gesamtpartikelkonzentration erreicht werden.

Mit der Gesamtpartikelkonzentration kann eine Massenkonzentration gemeint sein. In der Gesamtpartikelkonzentration können die Konzentrationen von Partikeln verschiedener Größen umfasst sein, beispielsweise zumindest die Konzentrationen von Partikeln mit einer Größe von weniger als 2,5 $\mu$m (PM 2,5) und von Partikeln mit einer Größe von weniger als 10 $\mu$m (PM 10). Ebenfalls ist es möglich, dass in der Gesamtpartikelkonzentration Konzentrationen von Partikeln mit einer Größe von weniger 50 $\mu$m oder weniger als 100 $\mu$m umfasst sind.

Der Überwachungsbereich kann sich in einer Industrieanlage befinden. Mit einer Industrieanlage kann eine Lagerhalle, eine Produktionsanlage, eine Anlage der chemischen Industrie, eine Bergbauanlage, eine Anlage der Lebensmittelindustrie, eine Tierhaltungsanlage, eine Rohstoffrückgewinnungsanlage, ein Kraftwerk oder dergleichen gemeint sein.

Generell kann, wenn hierin von einem Abstand die Rede ist, ein Abstand relativ zu dem optoelektronischen Sensor gemeint sein.

Das Sendelicht kann eine Wellenlänge im sichtbaren bis nahinfraroten Bereich (z.B. 905 nm) aufweisen. In Abhängigkeit vom Detektormaterial des Lichtempfängers und dessen Quanteneffizienz ist für die Messung der Partikel (insbesondere Staub) eine Wellenlänge im sichtbaren bis nahinfraroten Bereich von Vorteil, da die Streueffizienz der Partikel mit größer werdender Wellenlänge abnimmt und damit die remittierte und/oder reflektierte Energie abnimmt.

Die Verarbeitungsvorrichtung (bzw. deren Funktionen) kann vollständig oder teilweise durch den Lichtsender, Lichtempfänger, eine separate Einheit und/oder einen Remote-Server bereitgestellt sein. Die Verarbeitungsvorrichtung kann einen Prozessor, Mikroprozessor, FPGA und/oder ähnliches umfassen.

Vorzugsweise ist die Verarbeitungsvorrichtung in demselben Gehäuse wie der Lichtsender und Lichtempfänger vorhanden. Auf diese Weise kann eine besonders kompakte Bauform des optoelektronischen Sensors erreicht werden.

Es versteht sich, dass die Verarbeitungsvorrichtung ausgebildet sein kann, einen auf der ermittelten Gesamtpartikelkonzentration basierenden Ausgabeparameter auszugeben. Die Verarbeitungsvorrichtung kann ausgebildet sein, ein Warnsignal auszugeben, wenn die ermittelte Gesamtpartikelkonzentration gleich oder größer als ein Gesamtpartikelkonzentrationsgrenzwert ist. Anhand des Ausgabeparameters kann eine Steuerung der Industrieanlage erfolgen.

Gemäß einer Ausführungsform umfasst der optoelektronische Sensor einen LiDAR-Sensor, insbesondere einen 2D- oder 3D-LiDAR-Sensor.

Gemäß einer Ausführungsform umfasst die Gesamtpartikelkonzentration einen Massenwert pro Volumen. Mit dem Volumen kann ein Gasvolumen gemeint sein. Gemäß einer Ausführungsform umfassen die Messdaten Abstandswerte und Intensitätswerte. Die Verarbeitungsvorrichtung ist gemäß der Ausführungsform ausgebildet, Intensitätswerte in den Messdaten zu mitteln und basierend darauf eine Gesamtintensität zu berechnen, und basierend auf der Gesamtintensität und der Umrechnungsfunktion eine Gesamtpartikelkonzentration in dem Überwachungsbereich zu ermitteln, wobei die Umrechnungsfunktion eine Umrechnung von Gesamtintensitätswerten in Gesamtpartikelkonzentrationswerten angibt. Die Gesamtintensität kann als arithmetischer Mittelwert berechnet werden.

Gemäß einer Ausführungsform ist die Umrechnungsfunktion als lineare Funktion oder als polynomiale Funktion definiert. Beispielsweise kann die Gesamtintensität I in die Gesamtpartikelkonzentration M mittels der Beziehung gemäß folgender Gleichung 1,

[Gleichung 1]

$$M = I * a,$$

umgerechnet werden. Der Parameter oder Faktor a kann vorbestimmt sein. Insbesondere kann der Parameter a als Anstieg bzw. Steigung in einer (angepassten) linearen Regressionsfunktion vorkalibriert sein.

Gemäß einer Ausführungsform werden für die Berechnung der Gesamtintensität (nur) diejenigen Intensitätswerte gemittelt, welche gleich oder kleiner als ein Intensitätsgrenzwert sind. Dies kann zum Beispiel eine Hintergrundkompensation, bspw. durch Reflexionen an einer Rückwand, verbessern und/oder erlauben. Der Intensitätsgrenzwert kann an eine Reflektivität des Hintergrunds bzw. der Rückwand angepasst sein. Zusätzlich oder alternativ kann für eine Hintergrundkompensation eine Messung bei im Wesentlichen partikelfreier Umgebung vorgenommen werden. Der herbei gemessene Intensitätswert kann dann im Nachgang bei einer Messung mit vorhandenen Partikeln subtrahiert werden.

Gemäß einer Ausführungsform werden für die Berechnung der Gesamtintensität (nur) diejenigen Intensitätswerte gemittelt, deren zugehöriger Abstandswert in einem bestimmten Abstandskorridor und/oder entlang einer bestimmten Messtrecke liegt. Mit dem Abstandskorridor kann ein Bereich gemeint sein, welcher durch einen ersten und einen zweiten Abstandsgrenzwert aufgespannt wird, wobei der zweite Abstandsgrenzwert größer ist als der erste Abstandsgrenzwert. Der erste Abstandsgrenzwert kann größer als Null sein, beispielsweise mindestens 1 m. Durch die Filterung nach dem Abstandskorridor kann eine Hintergrundkompensation verbessert und/oder ermöglicht werden. Der Abstand des Hintergrunds bzw. der Rückwand, welcher der Festlegung des Abstandskorridors dient, kann beispielsweise anhand eines zweiten Intensitätsgrenzwertes ermittelt werden. Der zweite Intensitätsgrenzwert kann dem ersten Intensitätsgrenzwert entsprechen, oder größer oder kleiner als dieser sein. Der zugehörige Abstandswert bei einem Intensitätswert von gleich dem zweiten Intensitätsgrenzwert kann zum Beispiel als der Abstand des Hintergrunds bzw. der Rückwand festgelegt werden. Der Abstandskorridor kann dann so festgelegt werden, dass der Abstand des Hintergrunds bzw. der Rückwand von dem Abstandskorridor ausgenommen ist, also hinter dem Abstandskorridor (von dem optoelektronischen Sensor ausgesehen) liegt. In anderen Worten ist der zweite Abstandsgrenzwert für die Festlegung des Abstandskorridors kleiner als der Abstand des Hintergrunds bzw. der Rückwand, zum Beispiel 75%, 80%, 85%, 90%, 95% oder 99% des Abstands des Hintergrunds bzw. der Rückwand.

Gemäß einer Ausführungsform ist die Verarbeitungsvorrichtung ausgebildet, eine Abstandskorrektur der Messdaten, insbesondere vor der Berechnung der Gesamtintensität, vorzunehmen. Ein reflektierendes und/oder remittierendes Objekt kann umso heller erscheinen, desto näher es sich zu dem optoelektronischen Sensor befindet. Eine solche Abstandskorrektur ist bekannt und beispielsweise in der EP 0 978 718 B1 beschrieben. Hierfür kann eine Signaldynamik des optoelektronischen Sensors ermittelt werden und/oder bekannt sein. Die Ermittlung einer Signaldynamik des optoelektronischen Sensors kann durch Messung mit matt-weißen und matt-schwarzen entfernungsabhängigen Zielen erfolgen, wodurch eine möglichst große Bandbreite für ein remittierendes Objekt erzielt werden kann. Mit den Zielen aufgenommene Rückstreu-Messdaten können gegen den Abstand zum Sensor aufgetragen werden, wobei die erfasste Rückstreuung von den Zielen mit dem Abstand zu dem Sensor abnehmen kann. Beispielweise kann die Signaldynamik des matt-weißen Ziels für nahe Abstände, z.B. zwischen 1 bis 6 Meter, nahezu konstant sein und dann, z.B. ab 6 Meter Abstand, linear oder polynomial abfallen. Die Signaldynamik des matt-schwarzen Ziels kann für Abstände zwischen 1 und 16 Meter linear oder polynomial abfallen. Beispielsweise kann die Rückantwort von den Zielen bei einem bestimmten Abstand, z.B. 16 Meter, stark abfallen. Der Wirkungsgrad des optoelektronisches Sensor bemisst sich anhand der ausgesendeten Energie an Sendelicht und der empfangenen Energie an Empfangslicht.

Gemäß einer Ausführungsform ist die Umrechnungsfunktion vorkalibriert. Vorzugsweise ist die Umrechnungsfunktion jeweils für Partikel verschiedener Substanzen und/oder deren Mischungen vorkalibriert. Damit kann auch eine Vorkalibrierung auf verschiedene Partikelgrößen und/oder Partikelformen desselben chemischen Materials gemeint sein. Die gemessene Intensität kann beispielsweise von der Größe und den optischen Eigenschaften der Partikel der Substanz abhängig sein. Durch die Vorkalibrierung für die Partikel der Substanz (und vorzugsweise für Partikel verschiedener Substanzen) kann sichergestellt werden, dass eine korrekte Gesamtpartikelkonzentration ermittelt wird und/oder die Genauigkeit der Ermittlung der Gesamtpartikelkonzentration verbessert werden. Zudem kann der optoelektronische Sensor spezifisch auf die bestimmungsgemäße Anwendung angepasst werden.

Gemäß einer Ausführungsform sind die Partikel der Substanz ausgewählt aus einer Gruppe umfassend Holzstaub, Zementstaub, Kalkstaub (z.B. Kalziumcarbonat), Mehl, Sand, Staub durch Gussputzen, und Staub durch Gieß- und Schmelzbetrieb.

Gemäß einer Ausführungsform ist die Umrechnungsfunktion als lineare Regressionsfunktion und/oder mittels einer linearen Regressionsfunktion vorkalibriert.

Gemäß einer Ausführungsform ist die Umrechnungsfunktion als polynomiale Funktion und/oder mittels einer polynomialen Funktion vorkalibriert.

Gemäß einer Ausführungsform sendet der Lichtsender das Sendelicht in Form von zumindest einem Sendepuls aus. In anderen Worten setzt der optoelektronische Sensor eine pulsbasierte Lichtlaufzeitmessung ein. Der Lichtempfänger kann das Empfangslicht in Form von zumindest einem Empfangspuls, insbesondere in der Form von mehreren zeitlich nacheinander folgenden Empfangspulsen, empfangen, wobei die mehreren Empfangspulse durch einen einzigen Puls an Sendelicht verursacht sind.

Gemäß einer Ausführungsform weist der Sendepuls (insbesondere bei einer Wellenlänge im nahinfraroten Bereich, wie z.B. 905 nm) eine Pulsdauer von gleich oder größer als 1 ns und kleiner oder gleich 10 ns, bevorzugt gleich oder größer als 2 ns und kleiner oder gleich 5 ns, und noch weiter bevorzugt gleich oder größer als 3 ns und kleiner oder gleich 4 ns, auf. Vorzugsweise ist die Pulsdauer größer als 3 ns und kleiner oder gleich 4 ns. Auf diese Weise kann die Messgenauigkeit verbessert werden.

Weiterer Gegenstand der Erfindung ist ein System zur Kalibration eines optoelektronischen Sensors zur Messung, insbesondere LiDAR-Messung, von Partikelkonzentration, umfassend einen Kanal zum Durchströmen von Partikeln zumindest einer Substanz, wobei der Kanal in einem Bereich entlang seiner Längsachse (d.h. in einem Bereich entlang der Strömungsrichtung der Partikel der Substanz) eine Messöffnung aufweist. Das System umfasst ferner einen optoelektronischen Sensor, wobei der optoelektronischen Sensor (vorzugsweise in einer Entfernung von mindestens 1 m) zu der Messöffnung hin ausgerichtet ist, um Sendelicht in den Kanal zu senden. Das System umfasst ferner eine Verarbeitungsvorrichtung, welche ausgebildet ist, basierend auf von dem optoelektronischen Sensor mittels Lichtlaufzeitverfahren gewonnenen Messdaten, insbesondere Abstandswerten und Intensitätswerten über die Partikel der Substanz in dem Kanal, einen Gesamtintensitätswert zu berechnen. Das System umfasst ferner ein Partikelmessgerät, welches ausgebildet ist, ein Teilvolumen (bzw. einen Teilvolumenstrom) aus dem Kanal isokinetisch zu entnehmen und einen Gesamtpartikelkonzentrationswert zu messen.

Durch die bevorzugte Anordnung des optoelektronischen Sensors in einer Entfernung von mindestens 1 m zu der Messöffnung können störende Einflüsse auf die Messung verursacht durch die Einkopplung des Sendelichts in den Kanal und/oder durch Reflexion an einer Frontscheibe des optoelektronischen Sensors verringert oder vermieden werden.

Partikelmessgeräte zur isokinetischen Entnahme eines Teilvolumens zur Messung von Partikelkonzentrationswerten sind grundsätzlich bekannt. Das Partikelmessgerät kann ein rückgeführtes kontinuierliches Partikelmessgerät sein. Alternativ oder zusätzlich kann die isokinetische Entnahme des Teilvolumenstroms mit einem gravimetrischen Referenzverfahren nach DIN EN 13284-1 realisiert werden.

Mit der Entfernung kann eine Weglänge zwischen dem optoelektronischen Sensor und der Messöffnung gemeint sein.

Die Messöffnung kann eine für das Sendelicht im Wesentlichen transparente Abdeckung umfassen.

Der optoelektronische Sensor ist vorzugsweise in einem Winkel zwischen 40° und 50°, bevorzugt im Wesentlichen 45°, relativ zu der Längsachse des Kanals und/oder einer Strömungsrichtung der Partikel der Substanz ausgerichtet. Auf diese Weise kann die von dem Sendelicht in dem Kanal durchlaufene Messstrecke verlängert werden.

Der optoelektronische Sensor des Systems kann die gleichen oder ähnliche Komponenten aufweisen wie der hierin beschriebene optoelektronische Sensor zur Messung, insbesondere LiDAR-Messung, von Partikelkonzentration. Der optoelektronische Sensor des Systems kann einen Lichtsender umfassen, welcher ausgebildet ist, Sendelicht (durch die Messöffnung) in einen Überwachungsbereich (d.h. den Kanal), insbesondere in der Form zumindest eines Messtrahls (z.B. entlang einer Messtrecke bzw. Messachse), auszusenden. Der optoelektronische Sensor des Systems kann ferner einen Lichtempfänger umfassen, welcher ausgebildet ist, das von dem Überwachungsbereich, und insbesondere von Partikeln zumindest einer Substanz in dem Überwachungsbereich (d.h. in dem Kanal), remittierte und/oder reflektierte Sendelicht als Empfangslicht zu empfangen und basierend auf dem empfangenen Empfangslicht mittels Lichtlaufzeitverfahren Messdaten über den Überwachungsbereich, insbesondere Abstandswerte und Intensitätswerte über die Partikel der Substanz in dem Überwachungsbereich (d.h. in dem Kanal), zu gewinnen.

Die Verarbeitungsvorrichtung des Systems kann ausgebildet sein, Intensitätswerte in den von dem optoelektronischen Sensor gewonnenen Messdaten zu mitteln und basierend darauf einen Gesamtintensitätswert zu berechnen. Die Verarbeitungsvorrichtung des Systems kann ausgebildet sein, zumindest einen Ausgabeparameter basierend auf dem errechneten Gesamtintensitätswert und/oder dem gemessenen Gesamtpartikelkonzentrationswert auszugeben. Die Verarbeitungsvorrichtung des Systems (bzw. ihre Funktionen) kann vollständig oder teilweise durch den optoelektronischen Sensor, durch eine Verarbeitungsvorrichtung des Partikelmessgeräts, durch eine separate Einheit und/oder durch einen Remote-Server bereitgestellt werden.

Das System, insbesondere der Kanal, kann ausgebildet sein, verschiedene Konzentrationen an Partikeln der Substanz durch den Kanal strömen zu lassen. Auf diese Weise können mehrere Paare an errechneten Gesamtintensitätswerten und gemessenen Gesamtpartikelkonzentrationswerten gesammelt werden. Auf Basis dieser Wertepaare kann die Umrechnungsfunktion für Partikel einer bestimmten Substanz zum Beispiel als lineare Regressionsfunktion und/oder mittels einer linearen Regressionsfunktion erstellt bzw. vorkalibriert werden. Alternativ kann die Umrechnungsfunktion als polynomiale Funktion und/oder mittels einer polynomialen Funktion erstellt bzw. vorkalibriert werden. Beispielsweise kann ein mittels einer linearen Regressionsfunktion ermittelter Parameter (welcher z.B. dem Parameter a aus Gleichung 1 entspricht) oder ein mittels einer polynomialen Funktion ermittelter Parameter durch die Verarbeitungsvorrichtung des Systems in einem Ausgabeparameter ausgegeben werden und in einem Eingabeparameter auf den optoelektronischen Sensor zur Messung, insbesondere LiDAR-Messung, von Partikelkonzentration aufgespielt werden.

Weiterer Gegenstand der Erfindung ist eine Verwendung eines hierin beschrieben optoelektronischen Sensors zur Messung, insbesondere LiDAR-Messung, von Partikelkonzentration.

Weiterer Gegenstand der Erfindung ist eine Verwendung eines hierin beschriebenen Systems zur Kalibration eines hierin beschriebenen optoelektronischen Sensors zur Messung, insbesondere LiDAR-Messung, von Partikelkonzentration.

Weiterer Gegenstand der Erfindung ist ein Verfahren zur Kalibration eines optoelektronischen Sensors zur Messung, insbesondere LiDAR-Messung, von Partikelkonzentration, umfassend Durchströmen eines Kanals mit Partikeln zumindest einer Substanz, wobei der Kanal in einem Bereich entlang seiner Längsachse eine Messöffnung aufweist, Senden von Sendelicht in den Kanal durch die Messöffnung, vorzugsweise aus einer Entfernung von mindestens 1 m zu der Messöffnung, Gewinnen von Messdaten mittels Lichtlaufzeitverfahren, insbesondere von Abstandswerten und Intensitätswerten über die Partikel der Substanz in dem Kanal, Berechnung eines Gesamtintensitätswertes basierend auf den gewonnenen Messdaten, und isokinetische Entnahme eines Teilvolumens aus dem Kanal und Messung eines Gesamtpartikelkonzentrationswertes.

Gemäß einer Ausführungsform werden für verschiedene Konzentrationen an Partikeln der Substanz mehrere Wertepaare jeweils umfassend einen Gesamtintensitätswert und einen Gesamtpartikelkonzentrationswert ermittelt. Auf Basis dieser Wertepaare kann die Umrechnungsfunktion für Partikel einer bestimmten Substanz zum Beispiel mittels einer linearen Regressionsfunktion oder mittels einer polynomialen Funktion erstellt bzw. vorkalibriert werden. Beispielsweise kann ein Ausgabeparameter basierend auf einem mittels einer linearen Regressionsfunktion ermittelten Parameter (welcher z.B. dem Parameter a aus Gleichung 1 entspricht) oder basierend auf einem mittels einer polynomialen Funktion ermittelter Parameter ausgegeben werden. Ein auf dem Ausgabeparameter basierender Eingabeparameter kann dann auf einen optoelektronischen Sensor zur Messung, insbesondere LiDAR-Messung, von Partikelkonzentration aufgespielt werden. Auf diese Weise kann der optoelektronische Sensor zur Messung, insbesondere LiDAR-Messung, von Partikelkonzentration für variable Konzentrationen an Partikeln der Substanz vorkalibriert werden.

Weiterer Gegenstand der Erfindung ist ein Verfahren zur Messung, insbesondere LiDAR-Messung, von Partikelkonzentration, wobei Sendelicht in einen Überwachungsbereich, insbesondere in der Form zumindest eines Messtrahls, ausgesendet wird, wobei das von dem Überwachungsbereich, und insbesondere von Partikeln zumindest einer Substanz in dem Überwachungsbereich, remittierte und/oder reflektierte Sendelicht als Empfangslicht empfangen wird, wobei basierend auf dem empfangenen Empfangslicht mittels Lichtlaufzeitverfahren Messdaten über den Überwachungsbereich, insbesondere Abstandswerte und Intensitätswerte über die Partikel der Substanz in dem Überwachungsbereich, gewonnen werden, und wobei basierend auf den Messdaten und einer Umrechnungsfunktion eine Gesamtpartikelkonzentration in dem Überwachungsbereich ermittelt wird.

Es versteht sich, dass das bezüglich des erfindungsgemäßen optoelektronischen Sensors zur Messung, insbesondere LiDAR-Messung, von Partikelkonzentration Beschriebene auch für die Verwendung des optoelektronischen Sensors zur Messung, insbesondere LiDAR-Messung, von Partikelkonzentration und das Verfahren zur Messung, insbesondere LiDAR-Messung, von Partikelkonzentration gilt. Dies gilt insbesondere für Ausführungsformen und Vorteile. Selbiges gilt in entsprechender Weise für das System zur Kalibration eines optoelektronischen Sensors zur Messung, insbesondere LiDAR-Messung, von Partikelkonzentration, Verwendung des Systems zur Kalibration eines optoelektronischen Sensors zur Messung, insbesondere LiDAR-Messung, von Partikelkonzentration und Verfahren zur Kalibration eines optoelektronischen Sensors zur Messung, insbesondere LiDAR-Messung, von Partikelkonzentration. Weiterhin ist es zu verstehen, dass alle hierin offenbarten Merkmale und Ausführungsformen kombiniert werden können, wenn nicht ausdrücklich anders angegeben.

Nachfolgend wird die Erfindung rein beispielhaft anhand möglicher Ausführungsformen unter Bezugnahme auf die beigefügte Zeichnung beschrieben. Es zeigen:

Fig. 1     eine schematische Darstellung eines optoelektronischen Sensors zur Messung, insbesondere LiDAR-Messung, von Partikelkonzentration;

Fig. 2     eine schematische Darstellung eines Systems zur Kalibration eines optoelektronischen Sensors zur Messung, insbesondere LiDAR-Messung, von Partikelkonzentration;

Fig. 3     eine graphische Darstellung von in einer Nullmessung mit einem optoelektronischen Sensor gewonnenen Messdaten;

Fig. 4     eine graphische Darstellung von mit dem System in Fig. 2 aufgenommen Messwerten für die Kalibration einer Umrechnungsfunktion.

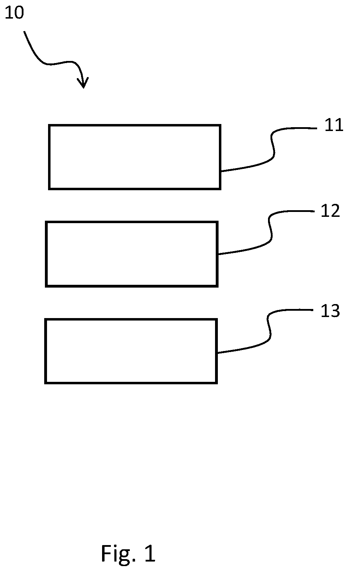

Der in Fig. 1 schematisch dargestellte optoelektronische Sensor 10 zur Messung, insbesondere LiDAR-Messung, von Partikelkonzentration, umfasst einen Lichtsender 11, welcher ausgebildet ist, Sendelicht in einen Überwachungsbereich, insbesondere in der Form zumindest eines Messtrahls (z.B. entlang einer Messtrecke bzw. Messachse), auszusenden, und einen Lichtempfänger 12, welcher ausgebildet ist, das von dem Überwachungsbereich, und insbesondere von Partikeln zumindest einer Substanz in dem Überwachungsbereich, remittierte und/oder reflektierte Sendelicht als Empfangslicht zu empfangen und basierend auf dem empfangenen Empfangslicht mittels Lichtlaufzeitverfahren Messdaten über den Überwachungsbereich, insbesondere Abstandswerte und Intensitätswerte über die Partikel der Substanz in dem Überwachungsbereich, zu gewinnen. Der optoelektronische Sensor 10 in Fig. 1 umfasst ferner eine Verarbeitungsvorrichtung 13, welche ausgebildet ist, basierend auf den Messdaten und einer Umrechnungsfunktion eine Gesamtpartikelkonzentration in dem Überwachungsbereich zu ermitteln. Der optoelektronische Sensor 10 kann einen LiDAR-Sensor, insbesondere 2D- oder 3D-LiDAR-Sensor, umfassen.

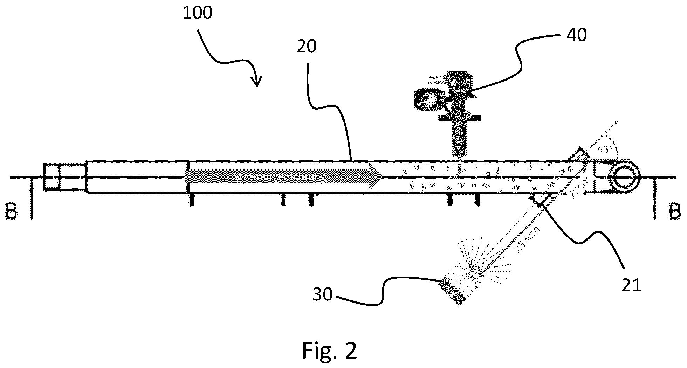

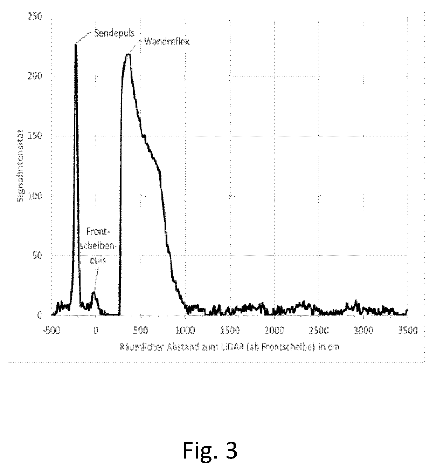

Fig. 2 zeigt schematisch ein System 100 zur Kalibration eines optoelektronischen Sensors zur Messung, insbesondere LiDAR-Messung, von Partikelkonzentration, wie er beispielsweise in Fig.1 gezeigt ist. Das System 100 in Fig. 2 umfasst einen Kanal 20 zum Durchströmen von Partikeln zumindest einer Substanz, wobei der Kanal 20 in einem Bereich entlang seiner Längsachse, d.h. in einem Bereich entlang der mit dem Pfeil in Fig. 2 dargestellten Strömungsrichtung der Partikel der Substanz, eine Messöffnung 21 aufweist. Das in Fig. 2 dargestellte System 100 umfasst ferner einen optoelektronischen Sensor 30, wobei der optoelektronische Sensor 30 in einer Entfernung von mindestens 1 m, hier 258 cm, zu der Messöffnung 21 hin ausgerichtet ist, um Sendelicht in den Kanal 20 zu senden. Durch die Anordnung des optoelektronischen Sensors 30 in einer Entfernung von mindestens 1 m zu der Messöffnung 21 können störende Einflüsse auf die Messung verursacht durch die Einkopplung des Sendelichts in den Kanal 20 und/oder durch Reflexion an einer Frontscheibe des optoelektronischen Sensors 30 verringert oder vermieden werden, wie näher für Fig. 3 erläutert. Die Messöffnung 21 kann eine für das Sendelicht im Wesentlichen transparente Abdeckung umfassen. Der optoelektronische Sensor 30 kann ein eingebautes Digitaloszilloskop mit 8 Bit A/D Wandler umfassen, womit die Höhe der empfangenen Pulse in 256 Stufen eingeteilt werden kann.

Der optoelektronische Sensor 30 des Systems 100 kann die gleichen oder ähnliche Komponenten aufweisen wie der optoelektronische Sensor 10 in Fig. 1 zur Messung, insbesondere LiDAR-Messung, von Partikelkonzentration. Der optoelektronische Sensor 30 des Systems 100 in Fig. 2 kann folglich einen Lichtsender umfassen, welcher ausgebildet ist, Sendelicht (durch die Messöffnung 21) in den Kanal 20, insbesondere in der Form zumindest eines Messtrahls (wie in Fig. 2 dargestellt), auszusenden. Das Sendelicht kann eine Wellenlänge im nahinfraroten Bereich, z.B. 905 nm aufweisen. Der Lichtsender des optoelektronischen Sensors 30 kann ausgebildet sein, kurze Pulse mit einer Emissionsdauer von ca. 3 ns bis 4 ns (bei der Wellenlänge von 905nm) auszusenden. Die Pulsdauer kann einen Effekt auf die Messgenauigkeit ausüben, da die Information verloren gehen kann, ob das remittierte und/oder reflektierte Sendelicht von der Vorderseite oder der Rückseite des Pulses stammt. Eine kurze Pulsdauer kann die Messgenauigkeit verbessern. Der optoelektronische Sensor 30 des Systems 100 kann ferner einen Lichtempfänger umfassen, welcher ausgebildet ist, das von den Partikeln der Substanz remittierte und/oder reflektierte Sendelicht als Empfangslicht zu empfangen und basierend auf dem empfangenen Empfangslicht mittels Lichtlaufzeitverfahren Messdaten über den Kanal 20, insbesondere Abstandswerte und Intensitätswerte über die Partikel der Substanz in dem Kanal 20, zu gewinnen.

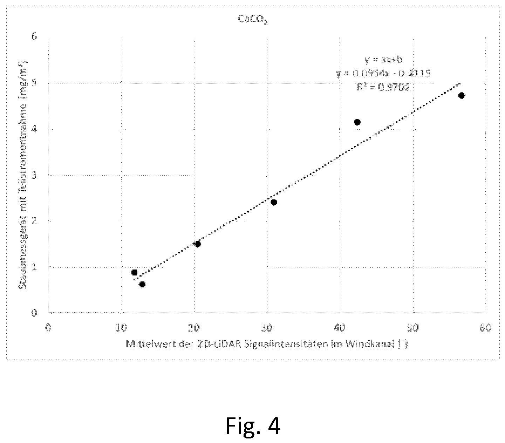

Der optoelektronische Sensor 30 in Fig. 2 kann einen LiDAR-Sensor, insbesondere einen 2D-LiDAR-Sesor, umfassen. Die Drehfrequenz des rotierenden Spiegels innerhalb des LiDAR-Sensors kann zum Beispiel eine Frequenz von 25 Hz, 35 Hz, 50 Hz, 75 Hz oder 100 Hz aufweisen. Die Winkelauflösung kann variabel, z.B. zwischen 0.16667° und 1°, einstellbar sein. Für die Messungen in Fig. 3 und Fig. 4 wurde eine Winkelauflösung von 1° gewählt. Der LiDAR-Sensor kann eine Abtastfrequenz von $f$ = 3 GHz aufweisen. Die Längenausdehnung des Laserlichtpulses kann ca. 50 cm betragen. Da der LiDAR-Sensor 30 die Daten räumlich in der Sende- und Empfangsebene aufnehmen kann, muss die Ausrichtung des LiDAR-Sensors 30 zur Messöffnung 21 nicht besonders exakt eingestellt werden. Es sollte lediglich sichergestellt sein, dass die Winkelsegmente (oder die sogenannten "Spots") ausgewertet werden, deren Sendelicht bzw. Messstrahl an Sendelicht parallel zu der und in die Messöffnung 21 des Kanals 20 verläuft, wie durch die gestrichelte Linie in Fig. 2 dargestellt.

Das in Fig. 2 gezeigte System 100 umfasst ferner eine Verarbeitungsvorrichtung (nicht in Fig. 2 dargestellt), welche ausgebildet ist, basierend auf von dem optoelektronischen Sensor 30 mittels Lichtlaufzeitverfahren gewonnenen Messdaten, insbesondere den Abstandswerten und Intensitätswerten über die Partikel der Substanz in dem Kanal 20, einen Gesamtintensitätswert zu berechnen. Die Verarbeitungsvorrichtung des Systems 100 kann ausgebildet sein, Intensitätswerte in den von dem optoelektronischen Sensor 10 gewonnenen Messdaten zu mitteln und basierend darauf den Gesamtintensitätswert zu berechnen. Insbesondere kann die Verarbeitungsvorrichtung des Systems 100 ausgebildet sein, für die Berechnung der Gesamtintensität (nur) diejenigen Intensitätswerte zu mitteln, deren zugehöriger Abstandswert in einem bestimmten Abstandskorridor und/oder entlang einer bestimmten Messstrecke liegt. Wie in Fig. 2 gezeigt kann der Abstandskorridor beispielsweise einen Abstandsbereich zwischen 258 cm und 325 cm zu dem optoelektronischen Sensor 30 umfassen, was einer Messstrecke von ungefähr 70 cm entspricht. Der Abstandsbereich kann in Abhängigkeit von den Umgebungsbedingungen und Geräteeigenschaften (z.B. Auslegung des Lichtsenders, Lichtempfängers und/oder Kanals, Remissionsgrad etc.) gewählt werden. Die Verarbeitungsvorrichtung kann ausgebildet sein, vor der Berechnung der Gesamtintensität die ("rohen") Messdaten einer Abstandskorrektur zu unterziehen.

Das System 100 in Fig. 2 umfasst ferner ein auf ein Größennormal (z.B. Partikel- oder Staubmasse) rückgeführtes kontinuierlich messendes Partikelmessgerät 40, welches ausgebildet ist, ein Teilvolumen aus dem Kanal 20 isokinetisch zu entnehmen und einen Gesamtpartikelkonzentrationswert zu messen.

Der für das System 100 in Fig. 2 gezeigte optoelektronische Sensor 30 ist in einem Winkel von im Wesentlichen 45° relativ zu der Längsachse des Kanals 20 und/oder der mit dem Pfeil dargestellten Strömungsrichtung der Partikel der Substanz ausgerichtet. Auf diese Weise kann die von dem Sendelicht in dem Kanal 20 durchlaufene Messstrecke verlängert werden, wie in Fig. 2 dargestellt auf ca. 70 cm.

Das System 100, insbesondere der Kanal 20, kann ausgebildet sein, verschiedene Konzentrationen an Partikeln der Substanz durch den Kanal 20 zu strömen. Auf diese Weise können mehrere Paare an errechneten Gesamtintensitätswerten und gemessenen Gesamtpartikelkonzentrationswerten gesammelt werden. Auf Basis dieser Wertepaare kann die Umrechnungsfunktion für Partikel einer bestimmten Substanz zum Beispiel mittels einer linearen Regressionsfunktion oder polynomialen Funktion erstellt bzw. vorkalibriert werden, wie nachfolgend für Fig. 4 beschrieben.

Fig. 3 zeigt eine graphische Darstellung von Messdaten, welche mit einem optoelektronischen Sensor, wie er beispielsweise in Fig. 1 oder für das System in Fig. 2 gezeigt ist, vor einer Rückwand in einer Nullmessung (d.h. keine Partikel der Substanz sind vorhanden) aufgenommen wurden. Der Graph in Fig. 3 zeigt die gemessene Signalintensität aufgetragen gegen den räumlichen Abstand zu dem optoelektronischen Sensor bzw. LiDAR-Sensor (relativ zu seiner Frontscheibe gesehen). Die Intensität des Sendepulses, des Frontscheibenpulses (d.h. des durch Reflexion und/oder Remission an der Frontscheibe des LiDAR-Sensors zurückgeworfenen Sendepulses) und des Wandreflexes (d.h. des durch Reflexion und/oder Remission an der Rückwand zurückgeworfenen Sendepulses) sind in dem Graph in Fig. 3 eingezeichnet. Wie aus Fig. 3 ersichtlich wird ab ca. 1 m Abstand zu dem LiDAR-Sensor kein störender Einfluss mehr durch den Frontscheibenpuls beobachtet. Die gemessene Signalintensität ist bis zur Reflexion und/oder Remission an der Rückwand und den dadurch hervorgerufenen Wandreflex durchwegs nahe Null. Die Position des Wandreflexes (und folglich der Abstand der Rückwand zu dem Sensor) kann z.B. mittels eines (zweiten) Intensitätsgrenzwertes von 200 gefunden werden.

Fig. 4 zeigt eine graphische Darstellung von mittels des Systems 100 in Fig. 2 aufgenommen Messwerten für die Kalibration einer Umrechnungsfunktion. Genauer wurden mehrere Messungen mit dem in Fig. 2 gezeigten System 100 durchgeführt, wobei Partikel an Kalziumkarbonat (mit der chemischen Formel CaCOs) für Kalkwäsche in verschiedenen Konzentrationen durch den Kanal 20 geströmt wurden. Für jede der verschiedenen Konzentration wurde mittels des Systems 100 zumindest ein Wertepaar an Gesamtintensitätswert und Gesamtpartikelkonzentrationswert ermittelt. Der Graph in Fig. 4 zeigt die mittels des Partikel- bzw.

Staubmessgeräts gemessenen Gesamtpartikelkonzentrationswerte in Masse pro Volumen, insbesondere Gasvolumen, (hier mg/m³) aufgetragen gegen die als Mittelwert berechneten Gesamtintensitätswerte aus der LiDAR-Messung (hier ohne Einheit bzw. in arbiträrer Einheit). Die Umrechnungsfunktion kann dann mittels einer an die Messwerte angepassten linearen Regressionsfunktion ermittelt werden unter Verwendung der allgemeinen Formel $y = ax+b$, wobei a die Steigung der linearen Regressionsfunktion ist und b der y-Achsenabschnitt. Aus den Messungen in Fig. 4 ergibt sich für die Steigung a ein Wert von 0,0954 und für b ein Wert von -0,4115. Das Bestimmtheitsmaß $R^2$ für die lineare Regression lag hier bei 0.9702 und somit nahe 100%, was eine sehr gute Anpassung der Messwerte an die lineare Beziehung bestätigt. Die so ermittelte Steigung a = 0,0954 kann dann in einem Ausgabeparameter ausgegeben und auf einen optoelektronischen Sensor 10, wie er beispielsweise in Fig. 1 gezeigt ist, aufgespielt werden. Die Steigung a = 0,0954 der angepassten linearen Regressionsfunktion repräsentiert den Parameter a, mit welchem die berechneten Gesamtintensität I in eine Gesamtpartikelkonzentration mithilfe der Gleichung 1 umgerechnet werden kann.

Es versteht sich, dass Partikel unterschiedlicher Substanzen in den Kanal eingebracht und gemessen werden können. Auf diese Weise kann der optoelektronische Sensor 10 in Fig. 1 spezifisch für seine bestimmungsgemäße Anwendung kalibriert werden. Beispielsweise können für Partikel verschiedener Substanzen jeweils ein Parameter a bestimmt und in eine Liste gespeichert werden. Diese Liste kann dann dem optoelektronischen Sensor 10 zur Verfügung gestellt werden, z.B. von diesem gespeichert werden. Für die spezifische Anwendung kann dann zumindest ein passender bzw. gewünschter Eintrag in der Liste ausgewählt werden.

Die Partikelkonzentration kann mittels des optoelektronischen Sensors 10 in Fig. 1 räumlich in einer Ebene oder dreidimensional von einem im Wesentlichen frei wählbaren Aufstellpunkt aus erfasst werden.

Die quantitative und flächenhafte (oder dreidimensionale) Bestimmung der Partikelzentration ist insbesondere zur Einhaltung von Explosionsgrenzwerten für verschiedene Stoffe (siehe beispielsweise die Datenbank https://staubex.ifa.dguv.de/) von diffusen Quellen und für die Einhaltung von Grenzwerten für A-Staub und E-Staub laut den Technischen Regeln für Gefahrstoffe (TRGS) in ausgedehnten Bereichen, z.B. zur Vermeidung von Silikose, von Vorteil. Dies kann man mit den hierin beschrieben Vorgehensweisen effizienter, insbesondere kostengünstiger und zeitsparender, erreicht werden, als dies mit bisherigen Messverfahren der Fall sein kann.

### Bezugszeichenliste

| 10 | optoelektronischer Sensor |
| 11 | Lichtsender |
| 12 | Lichtempfänger |
| 13 | Verarbeitungsvorrichtung |
| 20 | Kanal |
| 21 | Messöffnung |
| 30 | optoelektronischer Sensor |
| 40 | Partikelmessgerät |
| 100 | System |

**Patentansprüche**

1. Optoelektronischer Sensor (10, 30) zur Messung, insbesondere LiDAR-Messung, von Partikelkonzentration, umfassend

    einen Lichtsender (11), welcher ausgebildet ist, Sendelicht in einen Überwachungsbereich, insbesondere in der Form zumindest eines Messtrahls, auszusenden;
    einen Lichtempfänger (12), welcher ausgebildet ist, das von dem Überwachungsbereich, und insbesondere von Partikeln zumindest einer Substanz in dem Überwachungsbereich, remittierte und/oder reflektierte Sendelicht als Empfangslicht zu empfangen und basierend auf dem empfangenen Empfangslicht mittels Lichtlaufzeitverfahren Messdaten über den Überwachungsbereich, insbesondere Abstandswerte und Intensitätswerte über die Partikel der Substanz in dem Überwachungsbereich, zu gewinnen; und eine Verarbeitungsvorrichtung (13), welche ausgebildet ist, basierend auf den Messdaten und einer Umrechnungsfunktion eine Gesamtpartikelkonzentration in dem Überwachungsbereich zu ermitteln.

2. Optoelektronischer Sensor (10, 30) nach Anspruch 1, wobei der optoelektronische Sensor (10, 30) einen LiDAR-Sensor umfasst.

3. Optoelektronischer Sensor (10, 30) nach Anspruch 1 oder 2, wobei die Gesamtpartikelkonzentration einen Massenwert pro Volumen umfasst.

4. Optoelektronischer Sensor (10, 30) nach einem der voranstehenden Ansprüche,

    wobei die Messdaten Abstandswerte und Intensitätswerte umfassen,
    wobei die Verarbeitungsvorrichtung (13) ausgebildet ist,
    Intensitätswerte in den Messdaten zu mitteln und basierend darauf eine Gesamtintensität zu berechnen, und
    basierend auf der Gesamtintensität und der Umrechnungsfunktion eine Gesamtpartikelkonzentration in dem Überwachungsbereich zu ermitteln, wobei die Umrechnungsfunktion eine Umrechnung von Gesamtintensitätswerten in Gesamtpartikelkonzentrationswerten angibt,
    wobei die Umrechnungsfunktion vorzugsweise als lineare Funktion definiert ist.

5. Optoelektronischer Sensor (10, 30) nach Anspruch 4, wobei für die Berechnung der Gesamtintensität diejenigen Intensitätswerte gemittelt werden, welche gleich oder kleiner als ein Intensitätsgrenzwert sind.

6. Optoelektronischer Sensor (10, 30) nach Anspruch 4 oder 5, wobei für die Berechnung der Gesamtintensität diejenigen Intensitätswerte gemittelt werden, deren zugehöriger Abstandswert in einem bestimmten Abstandskorridor und/oder entlang einer bestimmten Messtrecke liegt.

7. Optoelektronischer Sensor (10, 30) nach einem der voranstehenden Ansprüche, wobei die Verarbeitungsvorrichtung (13) ausgebildet ist, eine Abstandskorrektur der Messdaten vorzunehmen.

8. Optoelektronischer Sensor (10, 30) nach einem der voranstehenden Ansprüche, wobei die Umrechnungsfunktion vorkalibriert ist, und vorzugsweise jeweils für Partikel verschiedener Substanzen und/oder deren Mischungen vorkalibriert ist; und/oder wobei die Partikel der Substanz ausgewählt sind aus einer Gruppe umfassend Holzstaub, Zementstaub, Kalkstaub, Mehl, Sand, Staub durch Gussputzen, und Staub durch Gieß- und Schmelzbetrieb.

9. Optoelektronischer Sensor (10, 30) nach einem der voranstehenden Ansprüche,

    wobei die Umrechnungsfunktion als lineare Regressionsfunktion und/oder mittels einer linearen Regressionsfunktion vorkalibriert ist, oder
    wobei die Umrechnungsfunktion als polynomiale Funktion und/oder mittels einer polynomialen Funktion vorkalibriert ist.

10. Optoelektronischer Sensor (10, 30) nach einem der voranstehenden Ansprüche, wobei der Lichtsender (11) das Sendelicht in Form von zumindest einem Sendepuls aussendet, wobei vorzugsweise der Sendepuls eine Pulsdauer von gleich oder größer als 1 ns und kleiner oder gleich 10 ns, bevorzugt gleich oder größer als 2 ns und kleiner oder gleich 5 ns, und noch weiter bevorzugt gleich oder größer als 3 ns und kleiner oder gleich 4 ns, aufweist.

11. System zur Kalibration eines optoelektronischen Sensors (10, 30) zur Messung, insbesondere LiDAR-Messung, von Partikelkonzentration, umfassend einen Kanal (20) zum Durchströmen von Partikeln zumindest einer Substanz, wobei der Kanal (20) in einem Bereich entlang seiner Längsachse eine Messöffnung (21) aufweist;

    einen optoelektronischen Sensor (10, 30), insbesondere einen optoelektronischen Sensor (10, 30) nach einem der voranstehenden Ansprüche, wobei der optoelektronischen Sensor (10, 30), vorzugsweise in einer Entfernung von mindestens 1 m, zu der Messöffnung (21) hin ausgerichtet ist, um Sendelicht in den Kanal (20) zu senden, wobei der optoelektronische Sensor (10, 30) vorzugsweise in einem Winkel zwischen 40° und 50°, bevorzugt im Wesentlichen 45°, relativ zu der Längsachse des Kanals (20) und/oder einer Strömungsrichtung der Partikel der Substanz ausgerichtet ist;

eine Verarbeitungsvorrichtung (13), welche ausgebildet ist, basierend auf von dem optoelektronischen Sensor (10, 30) mittels Lichtlaufzeitverfahren gewonnenen Messdaten, insbesondere Abstandswerten und Intensitätswerten über die Partikel der Substanz in dem Kanal (20), einen Gesamtintensitätswert zu berechnen; und

ein Partikelmessgerät (40), welches ausgebildet ist, ein Teilvolumen aus dem Kanal (20) isokinetisch zu entnehmen und einen Gesamtpartikelkonzentrationswert zu messen.

12. Verwendung eines optoelektronischen Sensors (10, 30) nach einem der Ansprüche 1 bis 10 zur Messung, insbesondere LiDAR-Messung, von Partikelkonzentration.

13. Verwendung eines Systems (100) nach Anspruch 11 zur Kalibration eines optoelektronischen Sensors (10, 30) nach einem der Ansprüche 1 bis 10 zur Messung, insbesondere LiDAR-Messung, von Partikelkonzentration.

14. Verfahren zur Kalibration eines optoelektronischen Sensors (10, 30) zur Messung, insbesondere LiDAR-Messung, von Partikelkonzentration, umfassend

Durchströmen eines Kanals (20) mit Partikeln zumindest einer Substanz, wobei der Kanal (20) in einem Bereich entlang seiner Längsachse eine Messöffnung (21) aufweist;

Senden von Sendelicht in den Kanal (20) durch die Messöffnung (21), vorzugsweise aus einer Entfernung von mindestens 1 m zu der Messöffnung (21);

Gewinnen von Messdaten mittels Lichtlaufzeitverfahren, insbesondere von Abstandswerten und Intensitätswerten über die Partikel der Substanz in dem Kanal (20);

Berechnung eines Gesamtintensitätswertes basierend auf den gewonnenen Messdaten; und

isokinetische Entnahme eines Teilvolumens aus dem Kanal (20) und Messung eines Gesamtpartikelkonzentrationswertes.

15. Verfahren zur Messung, insbesondere LiDAR-Messung, von Partikelkonzentration,

wobei Sendelicht in einen Überwachungsbereich, insbesondere in der Form zumindest eines Messtrahls, ausgesendet wird;

wobei das von dem Überwachungsbereich, und insbesondere von Partikeln zumindest einer Substanz in dem Überwachungsbereich, remittierte und/oder reflektierte Sendelicht als Empfangslicht empfangen wird;

wobei basierend auf dem empfangenen Empfangslicht mittels Lichtlaufzeitverfahren Messdaten über den Überwachungsbereich, insbesondere Abstandswerte und Intensitätswerte über die Partikel der Substanz in dem Überwachungsbereich, gewonnen werden; und

wobei basierend auf den Messdaten und einer Umrechnungsfunktion eine Gesamtpartikelkonzentration in dem Überwachungsbereich ermittelt wird.

**Geänderte Patentansprüche gemäss Regel 137(2) EPÜ.**

1. Optoelektronischer Sensor (10, 30) zur Messung, insbesondere LiDAR-Messung, von Partikelkonzentration, umfassend

einen Lichtsender (11), welcher ausgebildet ist, Sendelicht in einen Überwachungsbereich, insbesondere in der Form zumindest eines Messtrahls, auszusenden;

einen Lichtempfänger (12), welcher ausgebildet ist, das von Partikeln zumindest einer Substanz in einem Überwachungsbereich remittierte und/oder reflektierte Sendelicht als Empfangslicht zu empfangen und basierend auf dem empfangenen Empfangslicht mittels Lichtlaufzeitverfahren Messdaten über den Überwachungsbereich zu gewinnen; und

eine Verarbeitungsvorrichtung (13),

wobei die Messdaten Abstandswerte und Intensitätswerte über die Partikel der Substanz in dem Überwachungsbereich umfassen,

wobei die Verarbeitungsvorrichtung (13) ausgebildet ist,

Intensitätswerte in den Messdaten zu mitteln und basierend darauf eine Gesamtintensität zu berechnen, und

basierend auf der Gesamtintensität und einer Umrechnungsfunktion eine Gesamtpartikelkonzentration in dem Überwachungsbereich zu ermitteln, wobei die Umrechnungsfunktion eine Umrechnung von Gesamtintensitätswerten in Gesamtpartikelkonzentrationswerten angibt.

2. Optoelektronischer Sensor (10, 30) nach Anspruch 1, wobei der optoelektronische Sensor (10, 30) einen LiDAR-Sensor umfasst.

3. Optoelektronischer Sensor (10, 30) nach Anspruch 1 oder 2, wobei die Gesamtpartikelkonzentration einen Massenwert pro Volumen umfasst.

4. Optoelektronischer Sensor (10, 30) nach einem der voranstehenden Ansprüche, wobei die Umrechnungsfunktion als lineare Funktion definiert ist.

5. Optoelektronischer Sensor (10, 30) nach Anspruch 4, wobei für die Berechnung der Gesamtintensität diejenigen Intensitätswerte gemittelt werden, welche gleich oder kleiner als ein Intensitätsgrenzwert sind.

6. Optoelektronischer Sensor (10, 30) nach Anspruch 4 oder 5, wobei für die Berechnung der Gesamtintensität diejenigen Intensitätswerte gemittelt werden, deren zugehöriger Abstandswert in einem bestimmten Abstandskorridor und/oder entlang einer bestimmten Messstrecke liegt.

7. Optoelektronischer Sensor (10, 30) nach einem der voranstehenden Ansprüche, wobei die Verarbeitungsvorrichtung (13) ausgebildet ist, eine Abstandskorrektur der Messdaten vorzunehmen.

8. Optoelektronischer Sensor (10, 30) nach einem der voranstehenden Ansprüche, wobei die Umrechnungsfunktion vorkalibriert ist, und vorzugsweise jeweils für Partikel verschiedener Substanzen und/oder deren Mischungen vorkalibriert ist; und/oder wobei die Partikel der Substanz ausgewählt sind aus einer Gruppe umfassend Holzstaub, Zementstaub, Kalkstaub, Mehl, Sand, Staub durch Gussputzen, und Staub durch Gieß- und Schmelzbetrieb.

9. Optoelektronischer Sensor (10, 30) nach einem der voranstehenden Ansprüche,

   wobei die Umrechnungsfunktion als lineare Regressionsfunktion und/oder mittels einer linearen Regressionsfunktion vorkalibriert ist, oder wobei die Umrechnungsfunktion als polynomiale Funktion und/oder mittels einer polynomialen Funktion vorkalibriert ist.

10. Optoelektronischer Sensor (10, 30) nach einem der voranstehenden Ansprüche, wobei der Lichtsender (11) das Sendelicht in Form von zumindest einem Sendepuls aussendet, wobei vorzugsweise der Sendepuls eine Pulsdauer von gleich oder größer als 1 ns und kleiner oder gleich 10 ns, bevorzugt gleich oder größer als 2 ns und kleiner oder gleich 5 ns, und noch weiter bevorzugt gleich oder größer als 3 ns und kleiner oder gleich 4 ns, aufweist.

11. System zur Kalibration eines optoelektronischen Sensors (10, 30) zur Messung, insbesondere Li-DAR-Messung, von Partikelkonzentration, umfassend einen Kanal (20) zum Durchströmen von Partikeln zumindest einer Substanz, wobei der Kanal (20) in einem Bereich entlang seiner Längsachse eine Messöffnung (21) aufweist;

   einen optoelektronischen Sensor (10, 30), insbesondere einen optoelektronischen Sensor (10, 30) nach einem der voranstehenden Ansprüche, wobei der optoelektronischen Sensor (10, 30), vorzugsweise in einer Entfernung von mindestens 1 m, zu der Messöffnung (21) hin ausgerichtet ist, um Sendelicht in den Kanal (20) zu senden, wobei der optoelektronische Sensor (10, 30) vorzugsweise in einem Winkel zwischen 40° und 50°, bevorzugt im Wesentlichen 45°, relativ zu der Längsachse des Kanals (20) und/oder einer Strömungsrichtung der Partikel der Substanz ausgerichtet ist, und ausgebildet ist, von den Partikeln der Substanz remittiertes und/oder reflektiertes Sendelicht als Empfangslicht zu empfangen und basierend auf dem empfangenen Empfangslicht mittels Lichtlaufzeitverfahren Messdaten zu gewinnen;
   eine Verarbeitungsvorrichtung (13), welche ausgebildet ist, basierend auf den von dem optoelektronischen Sensor (10, 30) mittels Lichtlaufzeitverfahren gewonnenen Messdaten, insbesondere Abstandswerten und Intensitätswerten über die Partikel der Substanz in dem Kanal (20), einen Gesamtintensitätswert zu berechnen; und
   ein Partikelmessgerät (40), welches ausgebildet ist, ein Teilvolumen aus dem Kanal (20) isokinetisch zu entnehmen und einen Gesamtpartikelkonzentrationswert zu messen,
   wobei der Kanal (20) ausgebildet ist, verschiedene Konzentrationen an Partikeln der Substanz durch den Kanal strömen zu lassen, und wobei die Verarbeitungsvorrichtung (13) ausgebildet ist, für verschiedene Konzentrationen an Partikeln der Substanz mehrere Wertepaare jeweils umfassend einen Gesamtintensitätswert und einen Gesamtpartikelkonzentrationswert zu ermitteln und auf Basis dieser Wertepaare eine Umrechnungsfunktion für Partikel der Substanz zur Kalibration des optoelektronischen Sensors (10, 30) zu erstellen.

12. Verwendung eines optoelektronischen Sensors (10, 30) nach einem der Ansprüche 1 bis 10 zur Messung, insbesondere LiDAR-Messung, von Partikelkonzentration.

13. Verwendung eines Systems (100) nach Anspruch 11 zur Kalibration eines optoelektronischen Sensors (10, 30) nach einem der Ansprüche 1 bis 10 zur Messung, insbesondere LiDAR-Messung, von Partikelkonzentration.

14. Verfahren zur Kalibration eines optoelektronischen Sensors (10, 30) zur Messung, insbesondere LiDAR-Messung, von Partikelkonzentration, umfassend

Durchströmen eines Kanals (20) mit Partikeln zumindest einer Substanz, wobei der Kanal (20) in einem Bereich entlang seiner Längsachse eine Messöffnung (21) aufweist; Senden von Sendelicht in den Kanal (20) durch die Messöffnung (21), vorzugsweise aus einer Entfernung von mindestens 1 m zu der Messöffnung (21), wobei von den Partikeln der Substanz remittiertes und/oder reflektiertes Sendelicht als Empfangslicht empfangen wird; Gewinnen von Messdaten mittels Lichtlaufzeitverfahren basierend auf dem empfangenen Empfangslicht, insbesondere von Abstandswerten und Intensitätswerten über die Partikel der Substanz in dem Kanal (20); Berechnung eines Gesamtintensitätswertes basierend auf den gewonnenen Messdaten; und isokinetische Entnahme eines Teilvolumens aus dem Kanal (20) und Messung eines Gesamtpartikelkonzentrationswertes, wobei für verschiedene Konzentrationen an Partikeln der Substanz mehrere Wertepaare jeweils umfassend einen Gesamtintensitätswert und einen Gesamtpartikelkonzentrationswert ermittelt werden, wobei auf Basis dieser Wertepaare eine Umrechnungsfunktion für Partikel der Substanz zur Kalibration des optoelektronischen Sensors (10, 30) erstellt wird.

15. Verfahren zur Messung, insbesondere LiDAR-Messung, von Partikelkonzentration,

wobei Sendelicht in einen Überwachungsbereich, insbesondere in der Form zumindest eines Messtrahls, ausgesendet wird; wobei das von Partikeln zumindest einer Substanz in einem Überwachungsbereich remittierte und/oder reflektierte Sendelicht als Empfangslicht empfangen wird; wobei basierend auf dem empfangenen Empfangslicht mittels Lichtlaufzeitverfahren Messdaten über den Überwachungsbereich gewonnen werden, wobei die Messdaten Abstandswerte und Intensitätswerte über die Partikel der Substanz in dem Überwachungsbereich umfassen; wobei Intensitätswerte in den Messdaten gemittelt werden, um eine Gesamtintensität zu berechnen; und wobei basierend auf der Gesamtintensität und einer Umrechnungsfunktion eine Gesamtpartikelkonzentration in dem Überwachungsbereich ermittelt wird, wobei die Umrechnungsfunktion eine Umrechnung von Gesamtintensitätswerten in Gesamtpartikelkonzentrationswerten angibt.

10

11

12

13

Fig. 1

Fig. 2

Fig. 3

Fig. 4

Europäisches Patentamt
European Patent Office
Office européen des brevets

# EUROPÄISCHER RECHERCHENBERICHT

Nummer der Anmeldung

EP 25 15 0775

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2024/116188 A1 (MOBILE PHYSICS LTD [IL]) 6. Juni 2024 (2024-06-06) | 1-12,15 | INV. G01S7/48 |
| Y | * Seite 12, Zeile 28 - Seite 13, Zeile 15; Ansprüche 17,22-24 * <br> * Seite 2, Zeilen 11-14 * <br> * Seite 9, Zeilen 25-30 * <br> * Seite 3, Zeile 16 * <br> ----- | 11,13,14 | G01N15/075 G01S17/88 G01S7/497 |
| A | CN 107 478 555 A (UNIV SCIENCE & TECHNOLOGY CHINA) 15. Dezember 2017 (2017-12-15) * Anspruch 1 * <br> ----- | 9 | |
| A | CN 119 044 004 A (QINGDAO LEICE TRANSIENT TECH CO LTD) 29. November 2024 (2024-11-29) * Absätze [0074], [0075]; Ansprüche 1,5 * <br> ----- | 9 | |
| A | CHEN D S ET AL: "Application of LIDAR Technique and MM5-CMAQ Modeling Approach for the Assessment of Winter PM10 Air Pollution: A Case Study in Beijing, China", WATER, AIR , & SOIL POLLUTION, SPRINGER INTERNATIONAL PUBLISHING, CHAM, Bd. 181, Nr. 1-4, 23. Januar 2007 (2007-01-23), Seiten 409-427, XP037866502, ISSN: 0049-6979, DOI: 10.1007/S11270-006-9314-8 [gefunden am 2007-01-23] * Seite 413 * <br> ----- | 9 | RECHERCHIERTE SACHGEBIETE (IPC) <br> G01S <br> G01N |
| Y | CN 118 671 746 A (BEIJING HEJING TECH DEVELOPMENT CO LTD) 20. September 2024 (2024-09-20) * Anspruch 1; Abbildung 4 * <br> ----- | 11,13,14 | |

Der vorliegende Recherchenbericht wurde für alle Patentansprüche erstellt

| Recherchenort | Abschlußdatum der Recherche | Prüfer |
|---|---|---|
| München | 3. Juni 2025 | Grübl, Alexander |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 15 0775

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-06-2025

| Im Recherchenbericht angeführtes Patentdokument | Datum der Veröffentlichung | Mitglied(er) der Patentfamilie | Datum der Veröffentlichung |
|---|---|---|---|
| WO 2024116188 A1 | 06-06-2024 | WO 2024116187 A1<br>WO 2024116188 A1 | 06-06-2024<br>06-06-2024 |
| CN 107478555 A | 15-12-2017 | KEINE | |
| CN 119044004 A | 29-11-2024 | KEINE | |
| CN 118671746 A | 20-09-2024 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0978718 B1